# EUROPEAN PATENT APPLICATION

(11) **EP 1 770 472 A2**
(43) Date of publication of application: **04.04.2007**
(21) Application number: 06018043.7
(22) Date of filing: 29.08.2006
(51) Int. Cl.: G06F 1/16

(54) **Portable computer docking system**

(30) Priority: 30.09.2005 US 240142
(71) Applicant: Hewlett-Packard Development Company, L.P., Houston, TX 77070 (US)
(72) Inventor: Crosswy, William Caldwell, Houston, Texas 77070 (US); Lakdawala, Rahul V., Houston, Texas 77070 (US); Wagner, Matthew J., Houston, Texas 77070 (US); Krancher, Robert E., Houston, Texas 77070 (US)
(74) Representative: Schoppe, Fritz

(57) **Abstract**

A portable computer docking server system (10) comprises a docking assembly (12) communicatively couplable to a portable computer (14) where the docking assembly (12) has at least one server module (34).

## Description

### BACKGROUND

Portable computers are increasingly being used for both mobile and workstation or desktop applications or environments. For example, portable computers are generally used independently as a mobile device and as an office or desktop workstation via a docking station, thereby enabling the portable computer to be used as a desktop or workstation system while providing mobile convenience as well. However, conserving desktop work space, providing improved compatibility of the docking station with a variety of different types or models of portable computers in a desktop application, and providing a docking station having an ever-increasing variety of types functions or applications are important design objectives.

### BRIEF DESCRIPTION OF THE DRAWINGS

For a more complete understanding of the present invention and the advantages thereof, reference is now made to the following descriptions taken in connection with the accompanying drawings in which:

FIGURE 1A is a diagram illustrating an embodiment of a portable computer docking server system in accordance with the present invention;

FIGURE 1B is a diagram illustrating an enlarged view of an embodiment of a docking assembly of the system illustrated in FIGURE 1A in accordance with the present invention;

FIGURE 2 is a diagram illustrating another embodiment of a portable computer docking server system in accordance with the present invention;

FIGURES 3A and 3B are diagrams illustrating embodiments of stackable modules of the system illustrated in FIGURES 1 and 2 in accordance with the present invention; and

FIGURES 4A and 4B are diagrams illustrating an enlarged view of an embodiment of a stackable module of the system illustrated in FIGURES 1 and 2 in accordance with the present invention.

### DETAILED DESCRIPTION OF THE DRAWINGS

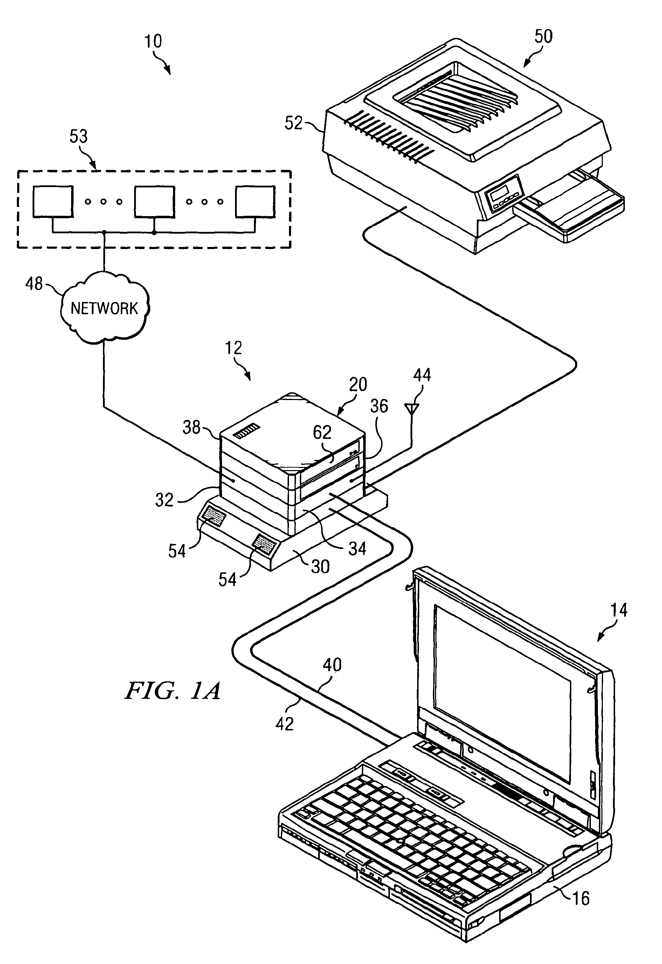

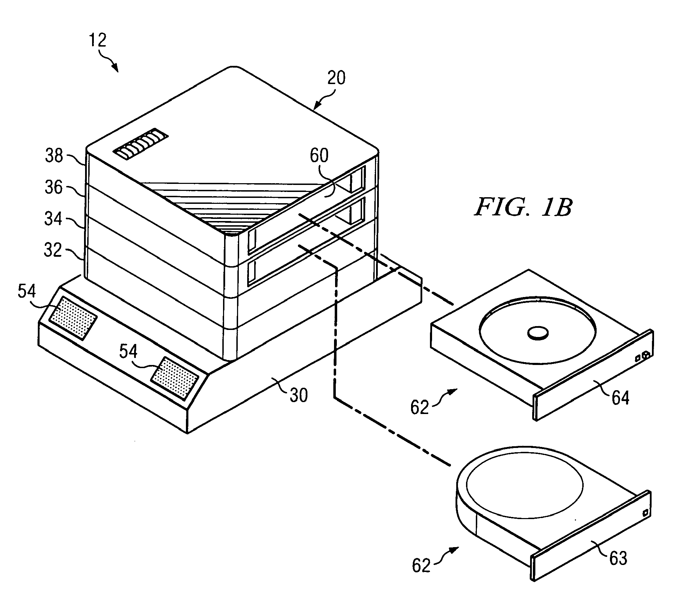

The preferred embodiments of the present invention and the advantages thereof are best understood by referring to FIGURES 1-4 of the drawings, like numerals being used for like and corresponding parts of the various drawings.

FIGURE 1A is a diagram illustrating an embodiment of a portable computer docking server system 10 in accordance with the present invention. In the embodiment illustrated in FIGURE 1A, system 10 comprises a docking assembly 12 adapted to be communicatively coupled to a portable computer 14. In the embodiment illustrated in FIGURE 1A, portable computer 14 comprises a notebook or laptop computer 16. However, it should be understood that portable computer 14 may comprise other types of computing devices.

In the embodiment illustrated in FIGURE 1A, docking assembly 12 comprises modular-shaped, stackable modules 20 configurable and/or selectable by a user to provide or obtain desired functions and/or applications for docking assembly 12. For example, in the embodiment illustrated in FIGURE 1A, modules 20 comprise an audio module 30, an input/output (I/O) module 32, a server module 34, and adapter modules 36 and 38. However, it should be understood that other types of modules 20 may also be used to form docking assembly 12. Further, it should be understood that a greater or fewer quantity of each type of module 20 may be used to form docking assembly 12. In operation, each module 20 comprises hardware, software, or a combination of hardware and software for providing particular computing and/or processing functions or capabilities. In some embodiments of the present invention, each module 20 comprises an independent computing resource having a particular processing and/or computing function and/or capability (e.g., one module as an interface device, one module as a hard drive, one module as an optical drive, one module as an audio component, one module as a server component, etc.). However, it should also be understood that one or more modules 20 may also be configured having multiple functions and/or capabilities (e.g., one module providing interface and data storage capabilities). Thus, in operation, modules 20 are configured to enable a user to select and/or otherwise combine various like or different modules 20 to obtain a docking assembly 12 having desired computing and/or processing properties.

In the embodiment illustrated in FIGURE 1A, modules 20 are disposed in a horizontal orientation and stacked vertically relative to each other. However, it should be understood that modules 20 may be otherwise stacked or positionally located relative to each other (e.g., in a vertical orientation and stacked horizontally) to form a modular array of computing resources. In the embodiment illustrated in FIGURE 1A, audio module 30 is configured having a different shape and size than modules 32, 34, 36 and 38. For example, because in some embodiments of the present invention audio module 30 is configured to be a support base for other modules 20, the shape and/or size of audio module 30 is configured larger for support purposes. However, it should be understood that each of modules 20 may be sized or otherwise geometrically configured to be the same or different from one another.

In operation, portable computer 14 is dockable with docking assembly 12 via a wired or wireless connection. For example, in some embodiments of the present invention, I/O module 32 is communicatively couplable to portable computer 14 via a wired connection 42. In other embodiments of the present invention, server module 34 is communicatively couplable to portable computer 14 via a wired connection 40. In yet other embodiments of the present invention, server module 34 is communicatively couplable to portable computer 14 via a wireless communication connection 44 (e.g., via an antenna and/or other type of wireless component(s) of portable computer 14). However, it should be understood that portable computer 14 may be otherwise communicatively docked with docking assembly 12 using one or more different or combinations or modules 20. Further, it should be understood that docking assembly 12 and/or portable computer 12 may be configured to facilitate physical docking of portable computer 14 with docking assembly 12 (e.g., physically connecting portable computer 14 to one of modules 20).

In the embodiment illustrated in FIGURE 1A, server module 34 is also communicatively coupled to a communication network 48 such as, but not limited to, the Internet, an intranet, a local area network (LAN), a wide area network (WAN) or other type of network of shared computer resources. Additionally, in the embodiment illustrated in FIGURE 1A, I/O module 32 is communicatively couplable to at least one peripheral device 50. In the embodiment illustrated in FIGURE 1A, peripheral device 50 comprises a printer device 52. However, it should be understood that other types and quantities of peripheral devices 50 may be communicatively coupled to docking assembly 12. Additionally and/or alternatively, it should be understood that one or more peripheral devices 50 may be communicatively coupled to server module 34 (e.g., via wireless communication connection 44). Further, it should be understood that, additionally or alternatively, one or more peripheral devices 50 may be incorporated into docking assembly 12 (e.g., configured as a module 20). In the embodiment illustrated in FIGURE 1A, network nodes 53 are communicatively coupled to docking assembly 12 via communication network 48. Nodes 53 may comprise any type of networked resource such as, but not limited to, a server, desktop computer, another docking assembly, and/or a network portal or interface, remotely located from and/or coupled to docking assembly 12 via communication network 48.

In the embodiment illustrated in FIGURE 1A, audio module 30 is disposed on the bottom of the stacked modules 20. However, it should be understood that modules 20 may be stacked or otherwise combined in any order. In the embodiment illustrated in FIGURE 1A, audio module 30 is configured to provide an audio output to a user of system 10 corresponding to data provided by portable computer 14, communication network 48, peripheral device(s) 50, and/or one or more other modules 20. For example, in the embodiment illustrated in FIGURE 1A, audio module 30 comprises a plurality of speaker elements 54 for providing an audio output signal (e.g., left and right channel output signals). However, it should be understood that a greater or fewer quantity of speaker elements 54 may be provided on audio module 30.

In the embodiment illustrated in FIGURE 1A, I/O module 32 provides a communication interface between modules 20, portable computer 14, peripheral devices 50, and/or communication network 48. For example, in some embodiments of the present invention, I/O module 32 provides an interface for inter-module 20 communications and provides a central interface for communications between docking assembly 12 and other resources, such as portable computer 14, peripheral device(s) 50, and communication network 48 (e.g., via server module 34). In some embodiments of the present invention, I/O module 32 is configured to provide a centralized power source for other modules 20 of docking assembly 12. However, it should also be understood that each module 20 may be independently powered.

In other embodiments of the present invention, server module 34 is configured to provide an interface for inter-module 20 communications and as an interface between docking assembly 12 and portable computer 14, communication network 48, and/or peripheral device(s) 50. For example, in some embodiments of the present invention, server module 34 enables wireless and/or wired docking of portable computer 14 with docking assembly 12 (e.g., via wireless communication connection 44 and/or wired communication connection 40, respectively). In some embodiments of the present invention, server module 34 also provides an interface between portable computer 14 and communication network 48 independently or via I/O module 32. Thus, in operation, in some embodiments of the present invention, server module 34 enables portable computer 14 to be wirelessly docked to docking assembly 12 with access to communication network 48. Accordingly, for example, in some embodiments of the present invention, docking assembly 12 enables a user to wirelessly dock to docking assembly 12 and enables the user to wirelessly access data stored in or on docking assembly 12, access and/or otherwise communicate with peripheral device(s) 50 coupled to docking assembly 12, and/or access other network resources via communication network 48.

In some embodiments of the present invention, server module 34 is configured to enable access to one or more modules 20 of docking assembly 12 and/or peripheral device(s) 50 via communication network 48 (e.g., independently of portable computer 14). For example, in operation, server module 34 enables a user to remotely access docking assembly 12 from one or more of network nodes 53 via communication network 48 to communicate with or otherwise access one or more modules 20 of docking assembly 12 and/or one or more peripheral devices 50 communicatively coupled to docking assembly 12. Further, in some embodiments of the present invention, server module 34 is configured to enable access to portable computer 14 docked with docking assembly 12 from one or more nodes 53 via communication network 48. For example, in some embodiments of the present invention, server module 34 is configured to provide notification to network 48 and/or nodes 53 (e.g., via a signal and/or otherwise) indicating a docked condition of portable computer 14 with docking assembly 12 and enabling communication with portable computer 14. Thus, for example, in operation, a user may access data and/or other content residing on portable computer 14 from a remotely located node 53 via communication network 48 when portable computer 14 is docked with docking assembly 12.

Referring to FIGURE 1B, an enlarged view of an embodiment of docking assembly 12 from FIGURE 1A is illustrated in accordance with the present invention. In the embodiment illustrated in FIGURE 1B, adapter modules 36 and 38 are each adapted to be configurable by a user of system 10 by enabling the user to modify or otherwise configure module 36 and/or 38 to provide a desired computing resource. For example, in some embodiments of the present invention, one or more adapter modules 36 and/or 38 are configured having an insertion bay 60 adapted for receiving therein different types of computer resources such as, but not limited to, a hard drive, optical drive, disk drive, audio and/or video resource component, or any other type of desired resource. For example, in the embodiment illustrated in FIGURE 1B, adapter modules 36 and 38 are each illustrated as having a different user-selected resource unit 62 disposable and/or installable therein (e.g., a hard drive device 63 and optical drive device 64, respectively) such that, in operation, resource unit(s) 62 are easily interchangeable with one or more adapter modules 36 and/or 38 to provide the user with desired computing resources in docking assembly 12. However, it should be understood that one or more adapter modules 36 and/or 38 may be hard-configured such that the particular adapter module provides a particular type of computing resource (e.g., a hard drive). Further, it should be understood that resource unit(s) 62 may comprise any type of device for providing a user-desired function.

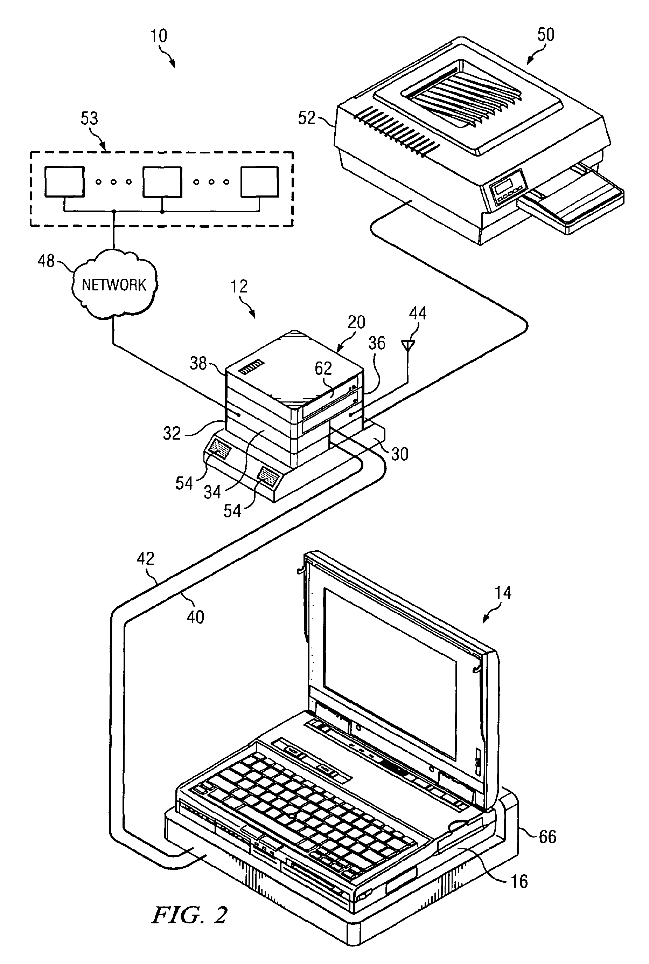

FIGURE 2 is a diagram illustrating another embodiment of portable computer docking server system 10 in accordance with the present invention. In the embodiment illustrated in FIGURE 2, system 10 comprises a dock 66 adapted to be communicatively coupled to portable computer 14. Additionally, in the embodiment illustrated in FIGURE 2, dock 66 is communicatively couplable to I/O module 32 and/or server module 34 via wired communication connections 40 and/or 42 and/or a wireless connection 44 (e.g., via an antenna and/or other type of wireless component of dock 66). Thus, in the embodiment illustrated in FIGURE 2, dock 66 is used to provide a convenient docking location for portable computer 14 such that portable computer 14 is easily and conveniently docked to dock 66 and, correspondingly, docking assembly 12, thereby alleviating a need to connect or otherwise couple mechanical cables or other devices to portable computer 14 to communicatively couple portable computer 14 to docking assembly 12. Moreover, in some embodiments of the present invention, server module 34 is configured to provide a notification to network 48 and/or nodes 53 indicating docking of portable computer 14 with dock 66 and enabling remote access to and/or communication with portable computer 14 from one or more nodes 53.

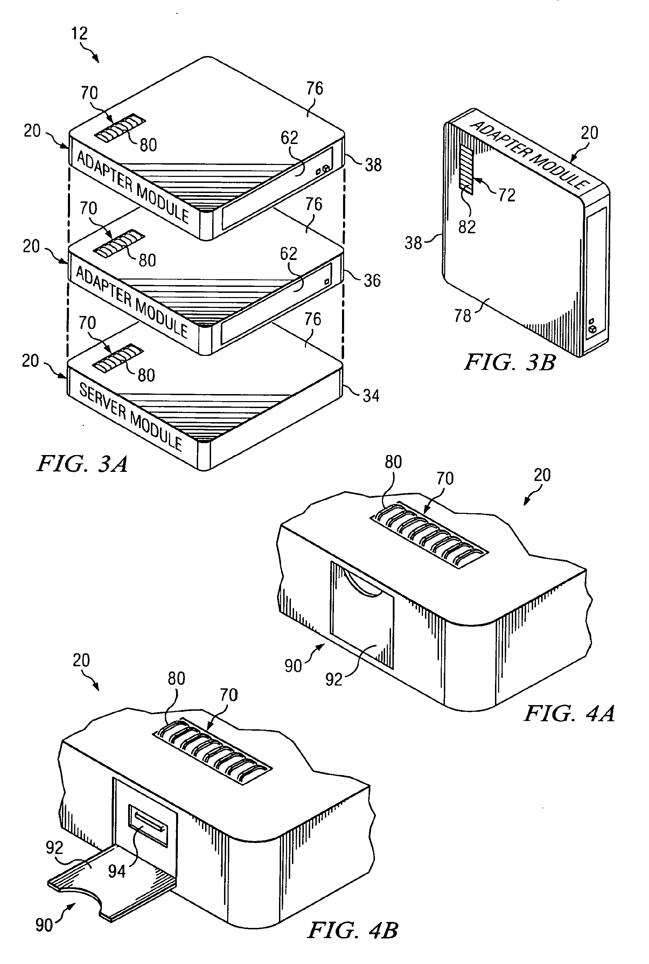

FIGURES 3A and 3B are diagrams illustrating an embodiment of a stackable module 20 in accordance with the present invention. In the embodiment illustrated in FIGURES 3A and 3B, module 20 comprises connector elements 70 and 72 disposed on opposite sides or surfaces thereof such that stacking of modules 20 relative to each other communicatively couples the corresponding modules 20 to each other. For example, in the embodiment illustrated in FIGURES 3A and 3B, each module 20 is configured having connector elements 70 and 72 correspondingly located such that, in response to stacking of modules 20 relative to each other, connector elements 70 and 72 engage each other to communicatively couple corresponding modules 20. Thus, for example, as illustrated in the embodiment of FIGURES 3A and 3B, connector elements 70 are located on a surface 76 of each module 20 corresponding to a location of a connector element 72 disposed on an opposite surface 78 of each module 20 to facilitate automatic engagement of connector elements 70 and 72 in response to stacking of modules 20. In the embodiment illustrated in FIGURES 3A and 3B, connector element 70 comprises connector pins or tabs 80 biased outwardly relative to module 20 to facilitate communicative engagement of tabs or pins 80 with corresponding connector pads 82 on an adjacently stacked module 20. However, it should be understood that modules 20 may be otherwise communicatively coupled together.

FIGURES 4A and 4B are cut-away diagrams illustrating an embodiment of a disengagement element 90 disposed on one or more of modules 20 in accordance with the present invention. In the embodiment illustrated in FIGURES 4A and 4B, disengagement element 90 is configured to communicatively disengage a particular module 20 from a communication link with other module(s) 20 of docking assembly 12 to facilitate independent use of the particular module 20 by a user relative to other module(s) 20. For example, in the embodiment illustrated in FIGURES 4A and 4B, disengagement element 90 comprises a member 92 rotatably coupled to module 20 such that element 92 is adapted to be rotated or otherwise moved to facilitate access to a connector 94 of the particular module 20. In operation, connector 94 is used to facilitate communicatively coupling the particular module 20 to another resource such as, but not limited to, portable computer 14. In some embodiments of the present invention, disengagement element 90 is configured to automatically interrupt or communicatively disengage the particular module 20 from other module(s) 20 of docking assembly 12 in response to movement of element 92 from a closed position, as illustrated in FIGURE 4A, to an open position, as illustrated in FIGURE 4B. For example, in operation according to some embodiments of the present invention, opening disengagement element 90 automatically disengages or otherwise interrupts the communicative coupling of the particular module 20 to adjacently-stacked module(s) 20 (e.g., disengaging or otherwise interrupting communications via connector elements 70 and/or 72). Thus, in some embodiments of the present invention, module 20 is configured such that disengagement element 90 provides a mechanical means of communicatively disengaging the particular module 20 from other modules 20. However, it should also be understood that various non-mechanical means may be used for communicatively disengaging the particular module 20 from other modules 20 of docking assembly 12. For example, in some embodiments of the present invention, the particular module 20 is configured to automatically detect an engagement of connector 94 with another device such that software and/or hardware configurations are altered or otherwise modified to provide communicative disengagement of module 20 relative to other modules 20 (e.g., disengaging or otherwise interrupting communications via connector elements 70 and/or 72).

Thus, embodiments of the present invention enable a convenient docking system 10 configurable by a user to obtain of otherwise select desired computing resources for system 10. For example, in some embodiments of the present invention, various types of computing resources configured as stackable modules 20 are selected by the user and stacked or otherwise combined to form docking assembly 12, thereby providing the user with the desired computing resources. In other embodiments of the present invention, one or modules 20 are configured to remain within a stacked arrangement relative to other modules 20 while enabling the user to configure or otherwise select particular computing resources for docking assembly 12. For example, in some embodiments of the present invention, adapter module(s) 36/38 are disposed in docking assembly 12, thereby enabling a user to configure particular adapter module(s) with desired computing resources 62.

Additionally, embodiments of the present invention enable remote access to docking assembly 12 via a communication network 48. For example, in some embodiments of the present invention, docking assembly 12 is configured having server module 34 disposed therein, thereby providing a network interface for remotely accessing docking assembly 12 via communication network 48. Thus, in operation, different types of computing resources 62 are easily and conveniently interchangeable by a user via adapter modules 36/38, thereby enabling the user to custom-design docking assembly 12 to provide to the user-desired functions and/or applications.

## Claims

1. A portable computer docking server system (10), comprising:
a docking assembly (12) communicatively couplable to a portable computer (14), the docking assembly (12) having at least one server module (34).

2. The system (10) of Claim 1, wherein the server module (34) is communicatively couplable to the portable computer (14) via an input/output (I/O) module (32).

3. The system (10) of Claim I, wherein the server module (34) is adapted to communicate, to a communication network (48), a docked condition of the portable computer (14) with the docking assembly (12).

4. The system (10) of Claim 1, wherein the server module (34) is adapted to enable remote access via a communication network (48) to a peripheral device (50) coupled to the docking assembly (12).

5. The system (10) of Claim 1, wherein the server module (34) is configured to enable access to the docking assembly (12) from a remotely-located network node (53).

6. The system (10) of Claim 1, wherein the server module (34) is configured to enable access to the portable computer (14) from a remotely-located network node (53).

7. The system (10) of Claim 1, wherein the docking assembly (12) is communicatively couplable to the portable computer (14) via a wireless connection.

8. The system (10) of Claim 1, wherein the server module (34) is configured to enable access to at least one drive device (63, 64) of the docking assembly (12) by at least one remotely-located network node (53).

9. The system (10) of Claim 1, wherein the server module (34) is configured to provide notification to at least one network node (53) of a docked condition of the portable computer (14) with the docking assembly (12).

10. The system (10) of Claim 1, wherein the server module (34) comprises a disengagement element (90) adapted to communicatively disengage the server module (34) from a communicative engagement with at least one other module (30, 32, 36, 38) of the docking assembly (12).
